# EUROPÄISCHE PATENTANMELDUNG

(11) **EP 2 477 098 A1**
(43) Veröffentlichungstag der Anmeldung: **18.07.2012**
(21) Anmeldenummer: 11150864.4
(22) Anmeldetag: 13.01.2011
(51) Int. Cl.: G06F 3/041, G06F 3/048

(54) **Verfahren zum Betreiben eines Geräts mit einem berührungsempfindlichen Steuerbereich**

(71) Anmelder: Gigaset Communications GmbH, 81379 München (DE)
(72) Erfinder: Mari, Andreas, 81829 München (DE)
(74) Vertreter: Michalski Hüttermann & Partner

(57) **Zusammenfassung**

Die Erfindung betrifft ein Verfahren zum Betreiben eines einen berührungsempfindlichen Steuerbereich aufweisenden Geräts mit folgenden Schritten: Erfassen eines ersten Fingerabdrucks eines Benutzers für einen vorbestimmten ersten Finger mittels des berührungsempfindlichen Steuerbereichs, Zuordnen des ersten Fingerabdrucks zu einer ersten Bedieneingabe und zu einem ersten Bedienbefehl, Abspeichern des Wertetripels ("erste Bedieneingabe", "erster Fingerabdruck", "erster Bedienbefehl") innerhalb des Geräts, Erfassen eines zweiten Fingerabdrucks des Benutzers für einen vorbestimmten zweiten Finger mittels des berührungsempfindlichen Steuerbereichs, Zuordnen des zweiten Fingerabdrucks zu einer zweiten Bedieneingabe und zu einem zweiten Bedienbefehl, Abspeichern des Wertetripels ("zweite Bedieneingabe", "zweiter Fingerabdruck", "zweiter Bedienbefehl") innerhalb des Geräts, wobei die erste Bedieneingabe von der zweiten Bedieneingabe verschieden ist und/oder der erste Finger von dem zweiten Finger verschieden ist. Auf diese Weise wird eine Möglichkeit bereitgestellt, ein Gerät über einen berührungsempfindlichen Steuerbereich möglichst einfach und zeitsparend zu bedienen, wobei diese Bedienung durch die begrenzte Größe des Steuerbereichs nicht eingeschränkt ist.

## Beschreibung

Die Erfindung betrifft ein Verfahren zum Betreiben eines einen berührungsempfindlichen Steuerbereich aufweisenden Geräts.

Verfahren zum Betreiben eines einen berührungsempfindlichen Steuerbereich, wie einen berührungsempfindlichen Bildschirm oder ein Touch-Pad, aufweisenden Geräts sind aus der Praxis in verschiedenen Ausgestaltungen gut bekannt. Beispiele für solche Geräte sind Notebooks mit einem Touch-Pad, wobei das Touch-Pad die Funktion einer Maus übernimmt, und Mobilfunkgeräte, Messgeräte, Automaten oder mobile Navigationssysteme mit einem berührungsempfindlichen Bildschirm, über den diese Geräte gesteuert werden.

Die Größe eines Bildschirms ist durch die Größe des Gerätes begrenzt, auf dem der Bildschirm eingesetzt wird. Beispielsweise beträgt die Diagonale eines Bildschirms bei Mobilfunkgeräten häufig nicht mehr als 9 cm. Bei mobilen Navigationssystemen für Autos beträgt die Diagonale des Bildschirms in etwa 13 cm. Dennoch wird ein berührungsempfindlicher Bildschirm häufig als Benutzerschnittstelle eingesetzt.

Um trotz der beschränkten Größe eine benutzerfreundliche Bedienung eines einen berührungsempfindlichen Bildschirms aufweisendes Gerätes zu erreichen, werden verschieden Möglichkeiten genutzt, mit denen auf Funktionen und Anwendungen innerhalb des Gerätes zugegriffen werden kann. Ein Beispiel für solche Möglichkeiten sind so genannte "Dropdown-Menüs", welche auch "Pulldown-Menüs" genannt werden. Diese eröffnen dem Benutzer durch Berühren des Bildschirms an einer vorbestimmten Stelle einen Katalog von Auswahlmöglichkeiten, welche durch Auswählen der entsprechenden Option ebenfalls neuen Auswahlmöglichkeiten anbieten können.

Ähnlich wie in einem Baumdiagramm bewegt sich der Benutzer in einer Vielzahl von Zweigen und sieht sich damit mit einer Vielzahl von Auswahlmöglichkeiten konfrontiert, von der er letztlich nicht mit Bestimmtheit beurteilen kann, ob sich hinter der nächsten Option die gewünschte Funktion oder Anwendung befindet.

Derartige Bedienungen können sehr zeitaufwendig sein. Zudem muss der Vorgang jedes Mal wiederholt werden, wenn die Anwendung gestartet werden soll.

Es ist daher Aufgabe der Erfindung, eine Möglichkeit bereitzustellen, ein Gerät über einen berührungsempfindlichen Steuerbereich möglichst einfach und zeitsparend zu bedienen, wobei diese Bedienung durch die begrenzte Größe des Steuerbereichs nicht eingeschränkt sein soll.

Diese Aufgabe wird durch die Verfahren der unabhängigen Patentansprüche gelöst. Bevorzugte Weiterbildungen sind in den Unteransprüchen beschrieben.

Eine Lösung der zuvor genannten Aufgabe besteht somit in einem Verfahren zum Betreiben eines einen berührungsempfindlichen Steuerbereich aufweisenden Geräts mit folgenden Schritten:
- Erfassen eines ersten Fingerabdrucks eines Benutzers für einen vorbestimmten ersten Finger mittels des berührungsempfindlichen Steuerbereichs,
- Zuordnen des ersten Fingerabdrucks zu einer ersten Bedieneingabe und zu einem ersten Bedienbefehl,
- Abspeichern des Wertetripels ("erste Bedieneingabe", "erster Fingerabdruck", "erster Bedienbefehl") innerhalb des Geräts,
- Erfassen eines zweiten Fingerabdrucks des Benutzers für einen vorbestimmten zweiten Finger mittels des berührungsempfindlichen Steuerbereichs,
- Zuordnen des zweiten Fingerabdrucks zu einer zweiten Bedieneingabe und zu einem zweiten Bedienbefehl,
- Abspeichern des Wertetripels ("zweite Bedieneingabe", "zweiter Fingerabdruck", "zweiter Bedienbefehl") innerhalb des Geräts,
   wobei die erste Bedieneingabe von der zweiten Bedieneingabe verschieden ist und/oder der erste Finger von dem zweiten Finger verschieden ist.

Die Begriffe "erste Bedieneingabe" und "zweite Bedieneingabe" bzw. "erster Finger" und "zweiter Finger" selbst bedeuten dabei also nicht zwingend, dass die Bedieneingaben bzw. Finger verschieden sind, vielmehr kann z.B. der erste Finger derselbe Finger wie der zweite Finger sein, wenn die Bedieneingaben voneinander verschieden sind.

Erfindungsgemäß umfasst das Verfahren zum Betreiben des Geräts das Erfassen von Fingerabdrücken, so dass einer Mehrzahl von Fingern, vorzugsweise jedem Finger des Benutzers ein Fingerabdruck zuordenbar ist. Durch die Zuordnung eines Wertes für den Fingerabdruck zu einer Bedieneingabe und einem Bedienbefehl wird ein Wertetripel erzielt, das eindeutig angibt, welcher Bedienbefehl bei einer bestimmten Bedieneingabe mit einem bestimmten Finger ausgeübt werden soll. Dies hat insbesondere den Vorteil, dass mit derselben Bedieneingabe unterschiedliche Bedienbefehle eingegeben werden können, nämlich in Abhängigkeit von dem jeweiligen Finger, der dafür verwendet wird.

Die Werte für "vorbestimmte Bedieneingabe" und "vorbestimmter Bedienbefehl" können, wie weiter unten ausgeführt, zusammen mit dem Fingerabdruck eingegeben bzw. erfasst werden. Gemäß einer bevorzugten Weiterbildung der Erfindung ist jedoch vorgesehen, dass eine Mehrzahl von Wertetripeln ("vorbestimmte Bedieneingabe", "vorbestimmter Finger", "vorbestimmter Bedienbefehl") innerhalb des Geräts vorab gespeichert ist und nach dem Erfassen des Fingerabdrucks eines Fingers mit einer vorbestimmten Fingerbezeichnung in dem Wertetripel der Wert "vorbestimmter Finger" durch den zugehörigen Wert "Fingerabdruck" ersetzt wird. Dies ermöglicht es, das Gerät mit einer Standardkonfiguration bereits auszuliefern, die z.B. angibt, dass eine bestimmte Geste mit dem rechten Zeigefinger des Benutzers einem bestimmten Bedienbefehl entspricht. Mit anderen Worten: Bei dieser Ausgestaltung der Erfindung müssen nur noch die Fingerabdrücke der einzelnen Finger erfasst werden.

Unter dem Begriff "Bedienbefehl" wird vorliegend ein Befehl verstanden, der das Gerät anweist, eine bestimmte Funktion auszuführen, wie Scrollen durch eine angezeigte Seite oder Vergrößern einer angezeigten Seite. Gemäß einer bevorzugten Weiterbildung der Erfindung ist für das obige Verfahren sowie für die nachfolgend beschriebenen Verfahren vorgesehen, dass der Bedienbefehl umfasst einen Befehl zum Freigeben des Gerätes, einen Befehl zum Freigeben des Bildschirms, einen Befehl zum Öffnen eines Menüs, einen Befehl zum Ausführen einer Funktion zum Drucken, einen Befehl zum Ausführen einer Funktion zum Öffnen einer Anwendung, einen Befehl zum Ausführen einer Funktion zum Senden eines ausgewählten Dokuments und/oder einen Befehl zum Ausführen einer Funktion zum Öffnen eines vorbestimmten Verzeichnispfades.

Der Begriff "Bedieneingabe" bezeichnet die Geste, mit der ein Finger oder mehrere Finger den Steuerbereich berührt bzw. berühren. Gemäß einer bevorzugten Weiterbildung der Erfindung ist für das obige Verfahren sowie für die nachfolgend beschriebenen Verfahren vorgesehen, dass die Bedieneingabe einen einfachen Finger-Klick, einen mehrfachen Finger-Klick und/oder einen Finger-Streich aufweist. Mit "Finger-Klick" wird ein Klopfen mit der Fingerspitze auf den Steuerbereich bezeichnet. "Finger-Streich" bezeichnet ein Streichen eines Fingers oder mehrerer Finger über den Steuerbereich. Bei der Verwendung von mehreren Fingern können diese parallel bewegt werden oder in voneinander verschiedene Richtungen.

Der Begriff "Finger" bzw. "vorbestimmter Finger" meint einen bestimmten Finger einer Hand, wie "linker Zeigefinger" oder "rechter Ringfinger". Der Begriff "Fingerabdruck" meint das Bild des Fingerabdrucks eines bestimmten Fingers. Die Information zu einem Fingerabdruck, auch Wert des Fingerabdrucks genannt, kann z.B. in Form einer das Bild des Fingerabdrucks widergebenden Bilddatei abgespeichert werden.

Das Erfassen der Fingerabdrücke kann auf verschieden Weisen erfolgen. Zum Beispiel können alle zehn Finger gleichzeitig erfasst werden, indem der Benutzer seine Hände auf den berührungsempfindlichen Steuerbereich legt. Zur Unterstützung dafür können z.B. Handumrisse auf dem Steuerbereich angezeigt werden, wenn es sich bei diesem um einen Bildschirm handelt. Eine andere Möglichkeit liegt darin, dass der Benutzer einer Anweisung des Gerätes folgt und auf eine jeweilige Aufforderung hin einzelne oder mehrere Finger auf den Steuerbereich legt. Dies hat den Vorteil, dass für die Erfassung der Fingerabdrücke nur so viel Fläche benötigt wird, wie ein Fingerabdruck groß ist. Mit anderen Worten, kann diese Art der Erfassung der Fingerabdrücke auf einem sehr kleinen berührungsempfindlichen Steuerbereich erfolgen.

Sollte dem Benutzer ein oder mehrere Finger fehlen, kann dies während der Erfassung der Fingerabdrücke dem Gerät mitgeteilt werden. Nachdem zu jedem Finger ein Fingerabdruck erfasst und innerhalb des Gerätes abgespeichert wurde, werden die zuvor innerhalb des Geräts abgespeicherten Bedienbefehle und Bedieneingaben zu den einzelnen Fingerabdrücken zugeordnet. Anschließend kann der Benutzer des Geräts einen Bedienbefehl in einfacher und zeitsparender Weise ausführen.

Entsprechend können die Fingerabdrücke mehrerer Personen abgespeichert und auf die gleiche Weise Bedienbefehle zugeordnet werden. Alternativ können bestimmte Personen von der Bedienung des Gerätes ausgeschlossen werden oder ihnen wird nur ein eingeschränkter Umfang von Funktionen und Anwendungen freigegeben. Nachdem die Fingerabdrücke mindestens eines Benutzers gespeichert wurden, kann die Bedienung für Benutzer mit unbekannten Fingerabdrücken ausgeschlossen werden. Die Benutzung durch unbefugte Personen oder Missbrauch des Geräts wird dadurch unmöglich.

Eine weitere Lösung der zuvor genannten Aufgabe besteht in einem Verfahren zum Betreiben eines einen berührungsempfindlichen Steuerbereich aufweisenden Geräts mit folgenden Schritten:
- Lernen eines ersten Bedienbefehls mittels
- Erfassen einer Bedieneingabe, die durch Berühren des Steuerbereichs an einer vorbestimmten Stelle und/oder auf eine vorbestimmte Weise durch wenigstens einen Finger eines Benutzers erfolgt,
- Erfassen des Fingerabdrucks des den Steuerbereich berührenden ersten Fingers, beim Berühren des Steuerbereichs,
- Erfassen eines mit der Bedieneingabe und dem Fingerabdruck zu verknüpfenden ersten Bedienbefehls und
- Abspeichern des Wertetripels ("erste Bedieneingabe", "erster Fingerabdruck", "erster Bedienbefehl") innerhalb des Geräts, und
- Lernen eines zweiten Bedienbefehls mittels
- Erfassen einer zweiten Bedieneingabe, die durch Berühren des Steuerbereichs an einer vorbestimmten Stelle und/oder auf eine vorbestimmte Weise durch wenigstens einen zweiten Finger des Benutzers erfolgt,
- Erfassen des Fingerabdrucks des den Steuerbereich berührenden zweiten Fingers, beim Berühren des Steuerbereichs,
- Erfassen eines mit der zweiten Bedieneingabe und dem zweiten Fingerabdruck zu verknüpfenden Bedienbefehls und
- Abspeichern des Wertetripels ("zweite Bedieneingabe", "zweiter Fingerabdruck", "zweiter Bedienbefehl") innerhalb des Geräts,
wobei die erste Bedieneingabe von der zweiten Bedieneingabe verschieden ist und/oder der erste Finger von dem zweiten Finger verschieden ist.

Bei dieser Ausgstaltung der Erfindung wird von keiner Standardkonfiguration ausgegangen. Vielmehr kann der Bedienbefehl, der mittels einer bestimmten Bedieneingabe, die mit einem bestimmten Finger gemacht wird, vom Benutzer frei definiert werden.

Die Begriffe "erste Bedieneingabe" und "zweite Bedieneingabe" bzw. "erster Finger" und "zweiter Finger" bedeuten dabei ebenfalls nicht zwingend, dass die Bedieneingaben bzw. Finger verschieden sind, vielmehr kann z.B. der erste Finger derselbe Finger wie der zweite Finger sein, wenn die Bedieneingabe voneinander verschieden sind.

Die Bedieneingabe erfolgt durch Berühren des berührungsempfindlichen Steuerbereichs an einer vorbestimmten Stelle und/oder auf eine vorbestimmte Weise durch wenigstens einen Finger eines Benutzers. Der Benutzer klickt sich durch die unterschiedlichen Ebenen innerhalb des Gerätes. Diese Ebenen können sich innerhalb bereits aufgerufener Anwendungen befinden, oder noch auf der obersten Ebene eines Betriebssystems liegen. Zum Beispiel können solche Ebenen die Verzeichnisstruktur oder Ordnerstruktur eines Computers oder eines Netzwerks darstellen. Die Bedieneingabe muss nicht mit der Auswahl einer Anwendung enden. Möglich ist auch die Auswahl einer Funktion, wie zum Beispiel das Drucken, Senden oder Öffnen eines Dokuments oder einer Anwendung.

Ist die erste Bedieneingabe eindeutig erfolgt, wird dieser der erste Fingerabdruck zugeordnet. Dies erfolgt, indem der Fingerabdruck des den Steuerbereich berührenden ersten Fingers beim Berühren des Steuerbereichs erfasst wird. Daraufhin wird ein Wertetripel ("erste Bedieneingabe", "erster Fingerabdruck", "erster Bedienbefehl") innerhalb des Geräts abgespeichert. Ist die zweite Bedieneingabe eindeutig erfolgt, wird dieser ein zweiter Fingerabdruck zugeordnet. Dies erfolgt, indem der Fingerabdruck des den Steuerbereich berührenden zweiten Fingers beim Berühren des Steuerbereichs erfasst wird. Daraufhin wird das Wertetripel ("zweite Bedieneingabe", "zweiter Fingerabdruck" und "zweiter Bedienbefehl") innerhalb des Geräts abgespeichert.

So kann durch einfaches Berühren des berührungsempfindlichen Steuerbereichs an einer vorbestimmen Stelle mittels eines Fingers eine Anwendung oder Funktion direkt ausgeführt werden. Somit kann der Benutzer unabhängig von der Größe des Steuerbereichs direkt auf Funktionen oder Anwendungen zugreifen.

In analoger Weise kann eine Bedieneingabe auch durch Berühren des Steuerbereichs auf eine vorbestimmte Weise durch wenigstens einen Finger des Benutzers erfolgen. Ebenfalls möglich ist in analoger Weise eine Bedieneingabe auch durch Berühren des Steuerbereichs auf einer beliebigen Stelle durch wenigstens einen Finger des Benutzers. Auf diese Weise kann zum Beispiel ein Menü geöffnet werden, welches weiter Optionen bereitstellt.

Gemäß einer bevorzugten Weiterbildung ist für wenigstens einen weiteren Bedienbefehl vorgesehen:
- Lernen des weiteren Bedienbefehls mittels
- Erfassen einer weiteren Bedieneingabe, die durch Berühren des Steuerbereichs an einer vorbestimmten Stelle und/oder auf eine vorbestimmte Weise durch wenigstens einen weiteren Finger des Benutzers erfolgt,
- Erfassen des Fingerabdrucks des den Steuerbereich berührenden weiteren Fingers, beim Berühren des Steuerbereichs,
- Erfassen eines mit der weiteren Bedieneingabe und dem weiteren Fingerabdruck zu verknüpfenden Bedienbefehls und
- Abspeichern des Wertetripels ("weitere Bedieneingabe", "weiterer Fingerabdruck", "weiterer Bedienbefehl") innerhalb des Geräts,
wobei die weitere Bedieneingabe von der ersten Bedieneingabe und/oder von der zweiten Bedieneingabe verschieden ist und/oder der weitere Finger von dem ersten Finger und/oder von dem zweiten Finger verschieden ist.

Somit können für alle zehn Finger eines Benutzers unterschiedliche Bedieneingaben und Bedienbefehle abgespeichert werden, wobei die Anzahl der Möglichkeiten durch Kombination unterschiedlicher, den Steuerbereich gleichzeitig berührender Finger nochmals erhöht werden kann.

Je nach Funktion oder Anwendung, die durch wenigstens einen Finger erzielt beziehungsweise bedient werden soll, kann es von Vorteil sein, die Bedieneingabe mittels eines einfachen Finger-Klicks, eines mehrfachen Finger-Klicks und/oder eines Finger-Streichs auszuführen. So kann zum Beispiel ein Finger mittels Finger-Streich das in dem Gerät geöffnete Fenster auf und ab bewegen, während der gleiche Finger-Streich mittels eines anderen Fingers zum Vergrößern eines Bildschirminhaltes führt. Ein Finger-Streich zum Beispiel in Form eines nahezu geschlossenen Kreises kann den aktuellen Bildschirmausschnitt an das Dokumentenende verschieben, während dieselbe Geste mittels eines oder mehrerer anderen Finger zur nächsten aktiven Anwendung wechselt.

Gemäß einer bevorzugten Weiterbildung werden zum Erfassen eines mit einer Bedieneingabe und mit einem Fingerabdruck zu verknüpfenden Bedienbefehls der Kontext und der auszuführende Befehl erfasst. Somit wird demselben Finger mit jeder Anwendung eine neue Funktion zugeteilt werden.

Gemäß einer bevorzugten Weiterbildung kann die Bedieneingabe durch mehrmaliges Berühren des Steuerbereichs in einer zeitlich frei bestimmbaren Reihenfolge durch wenigstens einen Finger erfolgen. Durch diese Option wird die Anzahl an Bedieneingaben deutlich erhöht. Denkbar sind drei, vier oder mehr Berührungen eines Fingers in Folge. Vorteilhaft ist auch ein Wechsel der den Steuerbereich berührenden Finger. Zum Beispiel kann die erste Berührung mittels Zeigefinger stattfinden, die zweite Berührung mittels Mittelfinger und die dritte Berührung mittels Ringfinger. Der Benutzer kann frei entscheiden, in welcher Reihenfolge er die Kombination der den Steuerbereich berührenden Finger auswählt. Damit kann jeder Benutzer selbst über eine intuitive Bedienung verfügen.

Besonders vorteilhaft ist dabei eine Reihenfolge, die die anatomischen Gegebenheiten der Hand berücksichtigt. So fällt vielen Menschen eine Kombination der den Steuerbereich berührenden Finger in folgender Reihenfolge besonders leicht: 1. kleiner Finger, 2. Ringfinger, 3. Mittelfinger, 4. Zeigefinger, 5. Daumen. Ebenfalls fällt vielen Menschen folgende Reihenfolge besonders leicht: 1. Daumen, 2. Zeigefinger, aber auch: 1. Daumen, 2. Mittelfinger oder Ringfinger oder kleiner Finger. Dabei ist unwesentlich, ob die Finger den Steuerbereich nur kurzzeitig berühren oder einer oder mehrere Finger auf dem Bildschirm liegen bleiben.

Gemäß einer bevorzugten Weiterbildung kann die zeitlich frei bestimmbare Reihenfolge durch unterschiedliche oder gleich lange Zeitabstände erfolgen. Durch diese Option wird die Anzahl an Bedieneingaben weiter erhöht. Durch die unterschiedlichen oder gleich langen Zeitabstände entstehen gewisse Rhythmen, die sich der Benutzer leicht merken kann. Jedem Finger kann durch das Gerät ein Ton zugeordnet werden, so dass beim Berühren des Steuerbereichs zu jedem erkannten Finger über einen in dem Gerät eingebauten Lautsprecher ein zugeordneter Ton ausgegeben wird. Alternativ oder zusätzlich ist eine visuelle Rückmeldung möglich. Zum Beispiel kann zu jedem erkannten Fingerabdruck der Bildschirm in einer vorbestimmten Farbe aufleuchten.

Gemäß einer Weiterbildung ist der Bedienbefehl ein Befehl zum Freigeben des Gerätes, und/oder ein Befehl zum Freigeben des Bildschirms und/oder ein Befehl zum Öffnen eines Menüs und/oder ein Befehl zum Ausführen einer Funktion, insbesondere einerFunktion zum Drucken, eine Funktion zum Öffnen einer Anwendung, eine Funktion zum Senden eines ausgewählten Dokuments und/oder ein Befehl zum Öffnen eines vorbestimmten Verzeichnispfades.

Gemäß einer Weiterbildung stellt der berührungsempfindliche Steuerbereich eine Benutzerschnittstelle zwischen Mensch und Gerät dar. Insbesondere ist es bevorzugt, dass es sich bei dem berührungsempfindlichen Steuerbereich um einen berührungsempfindlichen Bildschirm oder um ein Touch-Pad handelt. Die vorliegende Erfindung ist somit grundsätzlich auf alle Geräte anwendbar, die einen derartigen berührungsempfindlichen Steuerbereich aufweisen. Gemäß einer Weiterbildung ist das Gerät insbesondere ein Mobilfunkgerät, ein Notebook, ein Computer, ein Notepad oder ein Navigationsgerät.

Im Folgenden wird die vorliegende Erfindung anhand eines vorteilhaften Ausführungsbeispiels erläutert.

Moderne Mobilfunkgeräte lassen sich ohne Tastaturen bedienen. Die Bedienung erfolgt in diesem Fall über den berührungsempfindlichen Bildschirm. Der Benutzer gibt mittels seines Fingers Befehle über den berührungsempfindlichen Bildschirm in das Gerät ein. Zunächst schaltet der Benutzer den Bildschirm seines Handys frei. Dies erfolgt, indem er zum Beispiel mit seinem Daumen den Bildschirm für eine vorbestimmte Zeit berührt oder auf dem berührungsempfindlichen Bildschirm einen Kreis mit seinem Mittelfinger ausführt. Möglich ist auch die Verwendung einer Kombination von Fingern, welche den Bildschirm gleichzeitig berühren, zum Beispiel der Zeige- und der Ringfinger beziehungsweise eine Kombination von Fingern eine Geste ausführen. Die erfassten Daten, wie Fingerabdruck und Länge der Berührung beziehungsweise Art der Geste, werden zum Beispiel in einem Lookup-Table verglichen und führen dann entsprechend zu der Freigabe des Mobilfunkgerätes beziehungsweise zur dessen Sperrung.

Eine derartige Benutzung muss zunächst erlernt werden. Dies erfolgt, indem zunächst die Bedieneingabe erfasst wird, sodann der Fingerabdruck erfasst wird, dieser dann mit dann mit dem Bedienbefehl verknüpft wird und die Daten innerhalb des Gerätes zum Beispiel in einem Lookup-Table gespeichert werden. Die Bedieneingabe kann zum Beispiel durch das Berühren des Bildschirms an einer vorbestimmten Stelle durch wenigstens einen Finger des Benutzers erfolgen. So kann der Benutzer z.B. ein Menü öffnen und sich bis zu einem Programm oder einer Anwendung durchklicken. Nun wird wenigstens ein Fingerabdruck zusammen mit einer Geste dieser Anwendung beziehungsweise diesem Programm zugeordnet. Der Benutzer ist so in der Lage, die Anwendung aufzurufen, indem er die Geste mit dem entsprechenden Finger zu einem beliebigen Zeitpunkt an einer beliebigen Stelle durchführt. Eine weitere Möglichkeit liegt in der Zuordnung einer bestimmten Funktion. So kann man z.B. ein Bild durch Berühren mit dem mit kleinem Finger per E-Mail an einen weiteren Empfänger senden. Diese Liste von Möglichkeiten lässt sich in annährend beliebiger Vielfalt ergänzen.

Eine weitere Anwendungsmöglichkeit der vorliegenden Erfindung besteht in der Erhöhung der Sicherheit. So kann z.B. die Erkennung des Fingerabdrucks dazu dienen, den Benutzer zu identifizieren und damit gewisse Funktionen oder Anwendungen des Mobilfunkgerätes freizugeben.

Um unterschiedliche Operationen durchzuführen, ist jeder Operation entweder ein bestimmter Bereich der Oberfläche zugeordnet und/oder es werden bestimmte Bewegungen, zuvor auch Gesten genannt, wie kurze Berührungen, lange Berührungen, Wischen, Kombinationsgesten von mehreren Fingern, ausgewertet. So kann zum Beispiel ein Benutzer durch ein Wischen auf dem Bildschirm mittels des Ringfingers in ein aktuell dargestelltes Bild hineinzoomen oder aus einem Bild herauszoomen.

Das erfindungsgemäße Verfahren kann auch auf ein Navigationssystem angewendet werden. So kann zum Beispiel mittels Berühren durch den rechten Ringfinger der Benutzer den Ort seiner Wohnung abspeichern, während er durch die Berührung des Bildschirms mittels des rechten Zeigefingers den Ort seines Arbeitsplatzes abspeichern kann.

Eine weitere Anwendung der vorliegenden Erfindung besteht darin, Text in das Gerät einzugeben. Die vorliegende Erfindung ersetzt somit eine herkömmliche Computertastatur. Dies erfolgt, indem jedem Finger Buchstaben des Alphabets oder Bereiche des Tastenfeldes einer herkömmlichen Computertastatur zugeordnet werden. Der Benutzer gibt den Text auf dem Bildschirm in der Weise ein, als würde er mittels des bekannten 10-Fingersystems eine Computertastatur benutzen. Durch Abgleich von zuvor hinterlegten Informationen und der Reihenfolge der den Bildschirm berührenden Finger erkennt das Gerät, welches Wort der Benutzer eingibt. Sollten die Reihenfolge der den Bildschirm berührenden Finger nicht zu einer eindeutigen Zuordnung führen, werden Alternativen angezeigt. Der Benutzer kann dann das gewünschte Wort durch Berühren auswählen. Um neue Worte zu lernen, kann der Benutzer das Wort direkt eingeben. Dies erfolgt, indem er mit dem Finger, welchem das gesuchte Zeichen zugeordnet ist, mehrmals den Bildschirm berührt, bis das gewünschte Zeichen erscheint.

## Patentansprüche

1. Verfahren zum Betreiben eines einen berührungsempfindlichen Steuerbereich aufweisenden Geräts mit folgenden Schritten:
- Erfassen eines ersten Fingerabdrucks eines Benutzers für einen vorbestimmten ersten Finger mittels des berührungsempfindlichen Steuerbereichs,
- Zuordnen des ersten Fingerabdrucks zu einer ersten Bedieneingabe und zu einem ersten Bedienbefehl,
- Abspeichern des Wertetripels ("erste Bedieneingabe", "erster Fingerabdruck", "erster Bedienbefehl") innerhalb des Geräts
- Erfassen eines zweiten Fingerabdrucks des Benutzers für einen vorbestimmten zweiten Finger mittels des berührungsempfindlichen Steuerbereichs,
- Zuordnen des zweiten Fingerabdrucks zu einer zweiten Bedieneingabe und zu einem zweiten Bedienbefehl,
- Abspeichern des Wertetripels ("zweite Bedieneingabe", "zweiter Fingerabdruck", "zweiter Bedienbefehl") innerhalb des Geräts,
wobei die erste Bedieneingabe von der zweiten Bedieneingabe verschieden ist und/oder der erste Finger von dem zweiten Finger verschieden ist.

2. Verfahren nach Anspruch 1, **dadurch gekennzeichnet, dass** eine Mehrzahl von Wertetripeln ("vorbestimmte Bedieneingabe", "vorbestimmter Finger", "vorbestimmter Bedienbefehl") innerhalb des Geräts vorab gespeichert ist und nach dem Erfassen des Fingerabdrucks eines Fingers mit einer vorbestimmten Fingerbezeichnung in dem Wertetripel der Wert "vorbestimmter Finger" durch den zugehörigen Wert "Fingerabdruck" ersetzt wird.

3. Verfahren zum Betreiben eines einen berührungsempfindlichen Steuerbereich aufweisenden Geräts mit folgenden Schritten:
- Lernen eines ersten Bedienbefehls mittels
- Erfassen einer Bedieneingabe, die durch Berühren des Steuerbereichs an einer vorbestimmten Stelle und/oder auf eine vorbestimmte Weise durch wenigstens einen Finger eines Benutzers erfolgt,
- Erfassen des Fingerabdrucks des den Steuerbereich berührenden ersten Fingers, beim Berühren des Steuerbereichs,
- Erfassen eines mit der Bedieneingabe und dem Fingerabdruck zu verknüpfenden ersten Bedienbefehls und
- Abspeichern des Wertetripels ("erste Bedieneingabe", "erster Fingerabdruck", "erster Bedienbefehl") innerhalb des Geräts, und
- Lernen eines zweiten Bedienbefehls mittels
- Erfassen einer zweiten Bedieneingabe, die durch Berühren des Steuerbereichs an einer vorbestimmten Stelle und/oder auf eine vorbestimmte Weise durch wenigstens einen zweiten Finger des Benutzers erfolgt,
- Erfassen des Fingerabdrucks des den Steuerbereich berührenden zweiten Fingers, beim Berühren des Steuerbereichs,
- Erfassen eines mit der zweiten Bedieneingabe und dem zweiten Fingerabdruck zu verknüpfenden Bedienbefehls und
- Abspeichern des Wertetripels ("zweite Bedieneingabe", "zweiter Fingerabdruck", "zweiter Bedienbefehl") innerhalb des Geräts,
wobei die erste Bedieneingabe von der zweiten Bedieneingabe verschieden ist und/oder der erste Finger von dem zweiten Finger verschieden ist.

4. Verfahren nach Anspruch 2, wobei für wenigstens einen weiteren Bedienbefehl vorgesehen ist:
- Lernen des weiteren Bedienbefehls mittels
- Erfassen einer weiteren Bedieneingabe, die durch Berühren des Steuerbereichs an einer vorbestimmten Stelle und/oder auf eine vorbestimmte Weise durch wenigstens einen weiteren Finger des Benutzers erfolgt,
- Erfassen des Fingerabdrucks des den Steuerbereich berührenden weiteren Fingers, beim Berühren des Steuerbereichs,
- Erfassen eines mit der weiteren Bedieneingabe und dem weiteren Fingerabdruck zu verknüpfenden Bedienbefehls und
- Abspeichern des Wertetripels ("weitere Bedieneingabe", "weiterer Fingerabdruck", "weiterer Bedienbefehl") innerhalb des Geräts,
wobei die weitere Bedieneingabe von der ersten Bedieneingabe und/oder von der zweiten Bedieneingabe verschieden ist und/oder der weitere Finger von dem ersten Finger und/oder von dem zweiten Finger verschieden ist.

5. Verfahren nach Anspruch 3 oder 4, **dadurch gekennzeichnet, dass** beim Erfassen eines mit einer Bedieneingabe und mit einem Fingerabdruck zu verknüpfenden Bedienbefehls auch der Kontext erfasst wird.

6. Verfahren nach einem der vorangegangenen Ansprüche, **dadurch gekennzeichnet, dass** die Bedieneingabe einen einfachen Finger-Klick, einen mehrfachen Finger-Klick und/oder einen Finger-Streich aufweist.

7. Verfahren nach einem der vorangegangenen Ansprüche, **dadurch gekennzeichnet, dass** die Bedieneingabe durch aufeinanderfolgendes mehrmaliges Berühren des Steuerbereichs durch wenigstens einen Finger erfolgt.

8. Verfahren nach einem der vorangegangenen Ansprüche, **dadurch gekennzeichnet, dass** der Bedienbefehl aufweist
- einen Befehl zum Freigeben des Gerätes,
- einen Befehl zum Freigeben des Steuerbereichs,
- einen Befehl zum Öffnen eines Menüs,
- einen Befehl zum Ausführen einer Funktion zum Drucken,
- einen Befehl zum Ausführen einer Funktion zum Öffnen einer Anwendung,
- einen Befehl zum Ausführen einer Funktion zum Senden eines ausgewählten Dokuments und/oder
- einen Befehl zum Ausführen einer Funktion zum Öffnen eines vorbestimmten Verzeichnispfades.

9. Verfahren nach einem der vorangegangenen Ansprüche, **dadurch gekennzeichnet, dass** das Gerät ein Mobilfunkgerät, ein Notebook, ein Computer, ein Notepad oder ein Navigationsgerät ist.
